(19) Europäisches Patentamt

European Patent Office

Office européen des brevets

(11) **EP 1 263 210 A1**

## (12) DEMANDE DE BREVET EUROPEEN

(43) Date de publication:
**04.12.2002 Bulletin 2002/49**

(51) Int Cl.$^7$: **H04N 3/15**

(21) Numéro de dépôt: **02364029.5**

(22) Date de dépôt: **24.05.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **28.05.2001 FR 0107349**

(71) Demandeur: **STMicroelectronics S.A.
92120 Montrouge (FR)**

(72) Inventeur: **Simony, Laurent
56100 Lorient (FR)**

(74) Mandataire: **Ballot, Paul
Cabinet Ballot
4, rue Général Hoche
56100 Lorient (FR)**

### (54) Pixel actif CMOS à bruit reduit

(57) L'invention concerne un pixel actif CMOS à bruit réduit pour capteur d'image. Ce pixel comporte un élément photosensible (PD), un élément capacitif de rétroaction (CF) de capacité $C_F$, et quatre transistors à savoir un premier transistor (M1), deux transistors de réinitialisation (M3,M4) et un transistor de sélection du pixel (M2). Ces transistors sont . agencés et commandés de telle sorte que le premier transistor (M1) est monté en amplificateur pendant la phase de réinitialisation du pixel et en suiveur pendant la phase de lecture.

**FIG.3**

# EP 1 263 210 A1

**Description**

L'invention est du domaine des capteurs d'images avec pixels actifs CMOS. Elle concerne plus particulièrement un pixel actif CMOS à bruit réduit.

Actuellement, la principale limitation des capteurs d'image avec pixels actifs CMOS est la présence d'un bruit de réinitialisation dans les signaux électriques produits par les pixels du capteur. Ce bruit de réinitialisation est gênant car il est prépondérant par rapport aux autres bruits dans la chaîne analogique d'acquisition du signal.

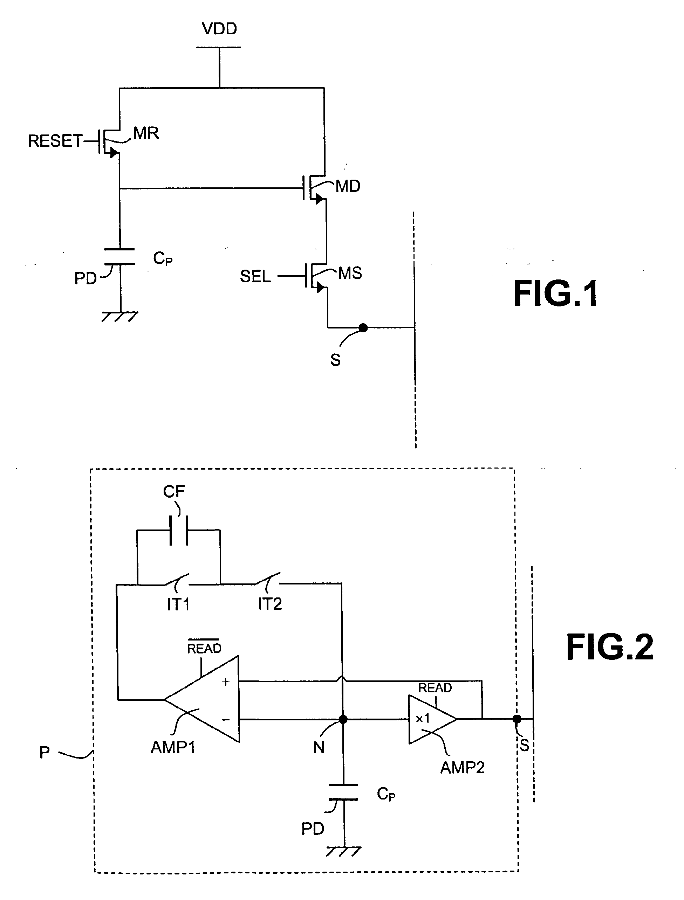

Un pixel actif CMOS classique comporte essentiellement un élément photosensible, tel qu'une photodiode, associé à trois transistors, un transistor de sélection pour sélectionner le pixel, un transistor pour réinitialiser la charge électrique de l'élément photosensible et un transistor de lecture pour délivrer un signal représentatif de la charge électrique de la photodiode avant et après réinitialisation du pixel. La structure d'un tel pixel actif CMOS est montrée à la figure 1. L'élément photosensible, noté PD, y est représenté par sa capacité $C_P$. Un transistor de réinitialisation MR est connecté entre une borne d'alimentation VDD et l'élément photosensible. Ce transistor est relié à l'élément photosensible en un point appelé noeud photosensible. Ce noeud photosensible est par ailleurs relié à la grille d'un transistor de lecture MD. Le drain du transistor MD est connecté à la borne d'alimentation VDD et sa source est connectée au drain d'un transistor de sélection MS. Enfin, le drain du transistor MS est connecté à une borne de sortie S du pixel. Pour sélectionner ce pixel, un signal SEL est appliqué sur la grille du transistor MS.

Un tel pixel actif CMOS fonctionne de la manière suivante : pendant une phase de réinitialisation (signal RESET actif), le potentiel de l'élément photosensible est réinitialisé à une valeur fixe V0. Puis, sous l'effet d'un signal lumineux, la charge électrique de l'élément photosensible est modifiée et la tension à ses bornes passe alors de V0 à V0+Vsignal, Vsignal étant représentatif du nombre de photons incidents reçus par le pixel. Un procédé à double échantillonnage corrélé dit CDS (pour Correlated Double Sampling en langue anglaise) est alors utilisé pour lire la valeur Vsignal. Ce procédé consiste à lire le signal à la sortie du pixel avant et après réinitialisation du pixel puis à calculer la différence entre les deux signaux pour en déduire Vsignal.

Un premier inconvénient de cette structure de pixel est que la phase de réinitialisation engendre un bruit de réinitialisation dans l'élément photosensible. Ce bruit est d'autant plus élevé que la capacité de la photodiode est faible. La valeur efficace de ce bruit est donnée par la formule suivante

$$B = \sqrt{\frac{kT}{Cp}}$$

où k est la constante de Boltzmann, T est la température absolue et $C_P$ est la capacité de la photodiode. Avec une capacité $C_P$ de 3 femtofarads, la valeur efficace du bruit est de 1,2 mV à une température de 300 Kelvins.

Un premier but de l'invention est de réduire ce bruit de réinitialisation.

Avec ce type de pixel actif CMOS, il existe par ailleurs un couplage direct entre la source d'alimentation en tension VDD et le noeud photosensible par l'intermédiaire de la capacité drain-grille du transistor de lecture. Un bruit d'alimentation vient alors s'ajouter au bruit de réinitialisation dans la photodiode.

Aussi, un autre but de l'invention est de réduire le bruit d'alimentation fourni à la photodiode, c'est-à-dire d'améliorer le taux de réjection d'alimentation du pixel.

Par ailleurs, l'utilisation d'un transistor MOS en tant qu'interrupteur pour réaliser la réinitialisation du pixel produit une injection de charges électriques dans la photodiode : une partie des charges électriques formant le canal du transistor MOS se retrouvent, après passage du transistor dans sa zone de blocage, dans la capacité de la photodiode. La variation de tension qui en résulte est d'autant plus élevée que la capacité de la photodiode est faible. Ce phénomène réduit encore l'excursion en tension du signal de sortie qui est déjà limitée par la valeur de la tension d'alimentation qui est généralement faible et qui le sera de plus en plus étant donné l'évolution actuelle des technologies.

Aussi, un autre but de l'invention est de réduire ce phénomène d'injection de charges électriques dans la photodiode.

Enfin, un problème de traînage apparaît également lorsque la phase de réinitialisation ne parvient pas à effacer totalement l'information acquise dans la photodiode lors de la précédente phase de lecture. Le traînage se manifeste sur un écran par une rémanence de l'image : l'image lue contient alors un résidu de l'image précédente. Ce problème apparaît quand on utilise une technique de réinitialisation à bande passante limitée.

Aussi, un autre but de l'invention est de s'affranchir de ce problème de traînage.

Une solution connue pour limiter le bruit de réinitialisation est présentée dans le document intitulée "Analysis and enhancement of low-light-level performance of photodiode-type CMOS active pixel imagers operated with sub-threshold reset" de Pain, Yang, Ortiz, Wrigley, Hancock et Cunningham, IEEE Workshop on CCDs and AIS, Nagano (Japon), pp 140-142, Juin 1999. La technique présentée dans ce document, connue sous le nom de "hard then soft reset", consiste à utiliser un transistor de réinitialisation fonctionnant en dessous de son seuil de conduction. Les résultats présentés dans ce document sont intéressants en termes de réjection d'alimentation, d'injection de charges électriques et de traînage. Cependant, cette technique ne permet de réduire le bruit de réinitialisation que d'un facteur 2.

Une autre solution est présentée dans le document intitulé "Low Noise Readout using Active Reset for CMOS APS" de Fowler, Godfrey, Balicki et Canfield, Proceedings of SPIE, vol. 3965, pp 126-135, 2000. La technique présentée dans ce document consiste à réinitialiser la photodiode en utilisant un amplificateur pour contre-réactionner le bruit de réinitialisation. Cette technique est très intéressante mais elle présente de nombreux inconvénients, notamment un nombre élevé de transistors par pixel (6 transistors), la nécessité d'une tension d'alimentation élevée car il y a plusieurs transistors montés en cascade, la nécessité d'une rampe de tension non bruitée, et une mise en oeuvre difficilement compatible avec une matrice de pixels.

L'invention concerne un pixel actif CMOS à bruit réduit pour capteur d'image comportant un élément photosensible, tel qu'une photodiode, dont la charge électrique est réinitialisée pendant une phase de réinitialisation et lue pendant une phase de lecture, ledit élément photosensible étant connecté entre un noeud photosensible et la masse, caractérisé en ce qu'il comporte en outre:

- un premier amplificateur actif pendant ladite phase de réinitialisation et dont les entrée inverseuse et non inverseuse sont respectivement connectées au noeud photosensible et à une première source de tension de référence,
- des premier et second interrupteurs connectés en série entre l'entrée inverseuse et la sortie dudit premier amplificateur, commandés respectivement par des premier et second signaux de commande, ledit premier signal de commande étant actif pendant un premier temps de la phase de réinitialisation et ledit second signal de commande étant actif pendant ledit premier temps et un second temps de ladite phase de réinitialisation, lesdits premier et second signaux de commande étant inactifs pendant un troisième temps de la phase de réinitialisation et pendant la phase de lecture,
- un élément capacitif de rétroaction de capacité $C_F$, monté en parallèle sur ledit premier interrupteur, et
- un second amplificateur monté en suiveur, actif pendant la phase de lecture, dont l'entrée est connectée au noeud photosensible et la sortie délivre un signal représentatif de la charge électrique dudit élément photosensible pendant ladite phase de lecture.

Selon une forme de réalisation préférée, lesdits premier et second amplificateurs sont formés par un premier transistor dont la grille est connectée au noeud photosensible et la source est reliée à ladite source de tension de référence pendant ladite phase de réinitialisation et à une première source de courant pendant ladite phase de lecture, et un transistor de sélection commandé par un signal de sélection actif pendant lesdites phases de réinitialisation et de lecture dudit pixel, dont la source est connectée au drain du premier transistor et dont le drain est connecté à une seconde source de courant pendant ladite phase de réinitialisation et à une seconde source de tension de référence pendant ladite phase de lecture. Pendant ladite phase de lecture, la source dudit premier transistor délivre un signal représentatif de la charge électrique dudit élément photosensible.

L'invention concerne également un procédé de réinitialisation d'un pixel actif CMOS comportant au moins un élément photosensible de capacité $C_P$ ayant un noeud photosensible, un amplificateur ayant une entrée inverseuse connectée audit noeud photosensible, une entrée non inverseuse et une sortie, des premier et second interrupteurs et un élément capacitif de rétroaction ayant une capacité $C_F$ monté en parallèle sur ledit premier interrupteur, ledit procédé étant caractérisé en ce qu'il comprend les étapes suivantes:

- appliquer, pendant un premier temps, une tension de référence sur l'entrée non inverseuse dudit amplificateur et relier la sortie dudit amplificateur sur son entrée inverseuse par l'intermédiaire desdits premier et second interrupteurs;
- relier, pendant un deuxième temps dit de relaxation, la sortie dudit amplificateur sur son entrée inverseuse par l'intermédiaire dudit élément capacitif de rétroaction et dudit second interrupteur jusqu'à atteindre un état d'équilibre; et
- ouvrir, pendant un troisième temps, lesdits premier et second interrupteurs.

D'autres caractéristiques et avantages de l'invention apparaîtront à la lecture de la description détaillée qui suit et qui est faite en référence aux dessins annexés, parmi lesquels :

- la figure 1, déjà décrite, représente un pixel actif CMOS classique à 3 transistors,
- la figure 2 montre un schéma d'un pixel actif CMOS selon l'invention,
- la figure 3 représente le schéma structurel détaillé d'un pixel actif CMOS selon l'invention; et
- la figure 4 représente les chronogrammes des signaux de commande du pixel actif CMOS selon l'invention.

La structure générale d'un pixel actif CMOS selon l'invention est montrée à la figure 2. Le pixel actif CMOS, référencé P dans cette figure, comprend une photodiode PD de capacité $C_P$, un amplificateur AMP1 actif pendant la phase de réinitialisation (signal READ inactif), un amplificateur suiveur AMP2 actif pendant la phase de lecture (signal READ actif), deux interrupteurs IT1 et IT2 montés en série entre la sortie et l'entrée inverseuse de l'amplificateur AMP1, et un élément capacitif CF de capacité $C_F$ monté en parallèle avec l'interrupteur IT1. La photodiode PD est connecté entre un noeud photosensible N et la masse. L'entrée non inverseuse de l'amplificateur AMP1 est connectée à une borne de sortie S du pixel qui reçoit une tension de référence pendant la phase de réinitialisation du pixel. L'amplificateur suiveur AMP2 actif pendant la phase de lecture est par ailleurs connecté entre le noeud photosensible et la borne de sortie S.

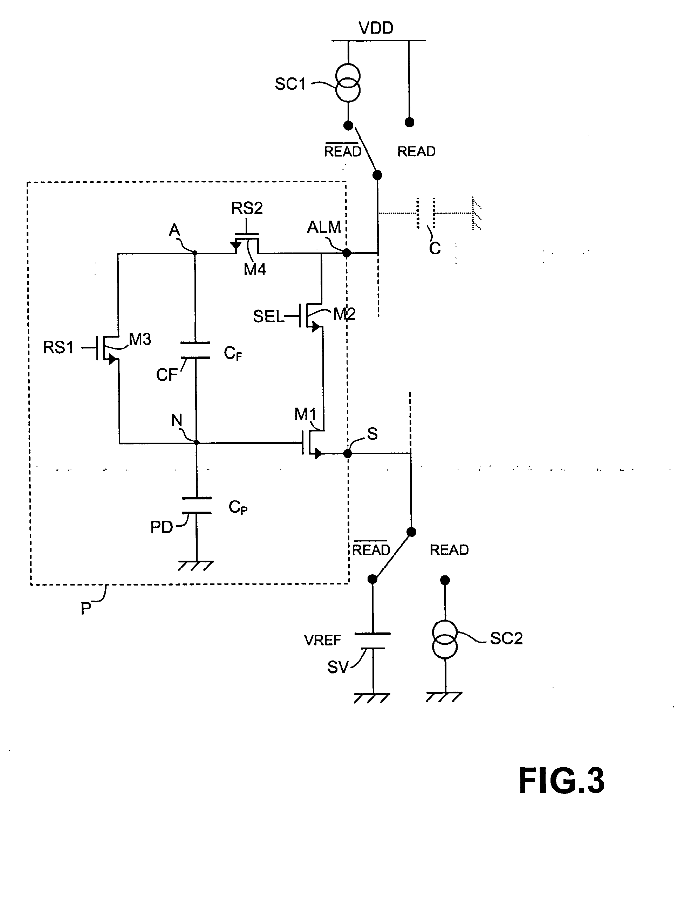

Une structure plus détaillée de ce pixel actif CMOS est montrée à la figure 3. Un transistor M1 et un transistor de sélection de ligne M2 sont utilisés pour former l'amplificateur AMP1 pendant la phase de réinitialisation. Ces mêmes transistors sont utilisés également pour former l'amplificateur suiveur AMP2 pendant la phase de lecture. Des transistors NMOS M3 et M4 forment les interrupteurs IT1 et IT2 de la figure 2. La phase de réinitialisation du pixel est découpée en trois temps $\phi_1$, $\phi_2$ et $\phi_3$ qui seront détaillés plus loin dans la description.

Si on décrit de manière plus détaillée la figure 3, le transistor M1 a sa grille connectée au noeud photosensible N et sa source connectée à la borne de sortie S du pixel. La borne de sortie S délivre un signal représentatif de la charge électrique de la photodiode pendant la phase de lecture du pixel. Le transistor de sélection M2 est monté en cascode avec le transistor M1, c'est-à-dire que sa source est reliée au drain du transistor M1. Son drain est connecté à une borne d'alimentation en tension et/ou en courant ALM du pixel et sa grille reçoit un signal de sélection SEL pour sélectionner le pixel. Le transistor M3, formant l'interrupteur IT1, est connecté entre le noeud photosensible N et un point A du pixel. Ce transistor est commandé par un signal de réinitialisation RS1 actif pendant le temps $\phi_1$ de la phase de réinitialisation du pixel. Le transistor M4 est connecté entre la borne d'alimentation en tension et/ou en courant ALM et le point A. Ce transistor est commandé par un signal de réinitialisation RS2 actif pendant les temps $\phi_1$ et $\phi_2$ de la phase de réinitialisation. Comme indiqué précédemment, l'élément capacitif CF est connecté en parallèle avec le transistor M3. La valeur de sa capacité $C_F$ est faible et compatible avec les dimensions du pixel. Enfin, une capacité C représentant la capacité des pixels de la colonne du pixel considéré est placée entre la borne d'alimentation en tension et/ou en courant ALM et la masse.

Des moyens sont prévus dans le capteur d'image contenant le pixel pour polariser et alimenter le pixel pendant les différentes phases de fonctionnement du pixel. Ces moyens sont avantageusement communs à tous les pixels d'une même colonne dans le capteur d'image, voire à tous les pixels du capteur d'image selon le cas. On prévoit donc une source de tension VDD et une source de courant SC1 pour alimenter la borne d'alimentation en tension et/ou en courant ALM du pixel respectivement pendant la phase de lecture et la phase de réinitialisation du pixel. On prévoit également une deuxième source de courant SC2 et une source de tension SV présentant un bruit négligeable pour imposer à la borne de sortie S du pixel respectivement un courant pendant la phase de lecture et une tension de référence VREF pendant la phase de réinitialisation.

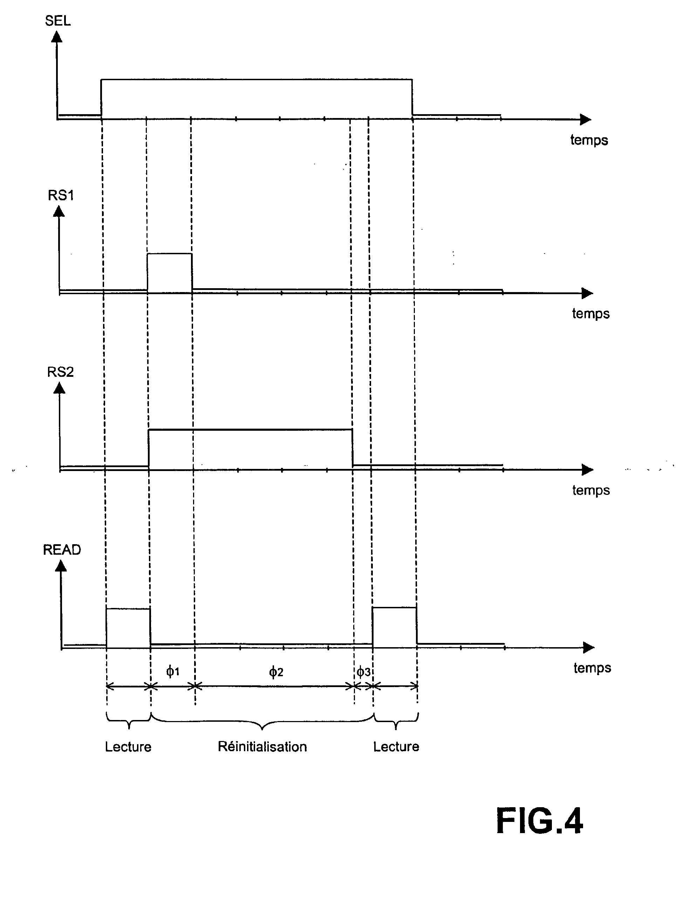

Le fonctionnement de ce pixel actif CMOS est illustré par les chronogrammes des signaux de commande SEL, RS1, RS2 et READ de la figure 4. La lecture de l'information contenue dans la photodiode après modification de sa charge électrique sous l'effet d'un signal lumineux nécessite une première phase de lecture pour acquérir un signal représentatif de l'illumination du pixel par le signal lumineux, une phase de réinitialisation de la charge électrique du pixel, et une deuxième phase de lecture pour acquérir un signal représentatif de la charge électrique initiale du pixel. La différence entre ces deux signaux donne un signal représentatif de la variation de la charge électrique due aux photons incidents du signal lumineux.

Pendant lesdites première et seconde phases de lecture du pixel, le signal de commande READ et le signal de sélection SEL sont actifs alors que les signaux RS1 et RS2 sont inactifs. Dans le cas de transistors MOS à canal N, un signal est dit actif s'il présente un niveau de tension haut et inactif s'il présente un niveau de tension bas.

Pendant la première phase de lecture, la borne ALM est alimentée par la tension d'alimentation VDD et un courant est imposé par la source de courant SC2 sur la borne de sortie S du pixel. Les transistors M3 et M4 sont bloqués. Le transistor M1, alors monté en suiveur, est alimenté à travers le transistor M2. Un signal de tension représentatif de la charge électrique de la photodiode est alors disponible sur la borne de sortie S du pixel.

Comme indiqué précédemment, la phase de réinitialisation qui suit est découpée en trois temps $\phi_1$, $\phi_2$ et $\phi_3$. Pendant ces trois temps, le signal READ est inactif.

### Premier temps ($\phi_1$)

Pendant le temps $\phi_1$, les signaux de commande SEL, RS1 et RS2 sont actifs. Les transistors M2, M3 et M4 sont donc conducteurs. Le. transistor M1 est monté en amplificateur et son drain est rebouclé sur sa grille par l'intermédiaire du transistor M2.

Le pixel est alimenté par le courant provenant de la source de courant SC1 et la tension de référence VREF est imposée sur la borne de sortie S du pixel. Le courant fourni par la source de courant SC1 traverse les transistors M1 et M2 et est absorbé par la source de tension SV. Un potentiel VREF+$V_{GS}$(M1) est imposé sur le noeud photosensible N, $V_{GS}$(M1) représentant la tension grille-source du transistor M1. Ce temps $\phi_1$ a pour but d'effacer l'information contenue initialement dans le pixel en imposant une tension fixe aux bornes de la photodiode.

### Deuxième temps dit de relaxation ($\phi_2$)

Pendant le temps $\phi_2$, le signal de commande RS1 est inactif. Le transistor M3 est alors bloqué. La tension de bruit

$$\sqrt{\frac{kT}{C_F}}$$

est échantillonnée sur l'élément capacitif CF. Le transistor M1 est contre-réactionné par le diviseur capacitif formé de l'élément capacitif CF et de la capacité de la photodiode PD. Le transistor M1 fonctionne alors en amplificateur (amplificateur AMP1). Les transistors M1 et M2 étant montés en cascode, on obtient alors un gain statique élevé pour le transistor M1.

Le gain statique du transistor M1 s'exprime sous la forme suivante :

$$G_0 = gm_1 \times R_0$$

Où $gm_1$ est la transconductance du transistor M1 et $R_0$ est son impédance de charge sur la borne ALM.

Le gain de la boucle formée par les transistors M1 et M2 et le diviseur capacitif vaut :

$$G_b = G_0 \times \frac{C_F}{C_F + C_P} >> 1$$

La valeur du gain de boucle $G_b$ reste élevée malgré le diviseur capacitif.

Par ailleurs, le produit gain - bande passante, égal à $gm_1/C$, où C représente la capacité de charge sur la borne ALM, est fixé par le choix du courant traversant le transistor M1 à savoir le courant fourni par la source de courant SC1.

Pendant ce temps $\phi_2$, l'amplificateur AMP1 trouve un nouvel état d'équilibre. Cet état est atteint rapidement, au bout de quelques dizaines de microsecondes, en raison du produit gain - bande passante élevé. Le gain de boucle $G_b$ élevé fait en sorte que le bruit de réinitialisation

$$\sqrt{\frac{kT}{C_F}}$$

échantillonné en contre-réaction sur l'élément capacitif se répartisse pour une fraction $\frac{1}{G_b + 1}$ sur la photodiode, et pour une fraction $\frac{G_b}{G_b + 1}$ sur le drain du transistor M2. Il en résulte que le bruit, noté B1, introduit par l'élément capacitif CF dans la photodiode est fortement atténué par le gain de boucle. On a alors :

$$B1 = \frac{\sqrt{\frac{kT}{C_F}}}{G_b + 1} \approx \frac{\sqrt{kT}}{G_0} \times \frac{C_F + C_P}{C_F^{3/2}}$$

Un bruit B2 très large bande (environ 10GHz) est également produit par le transistor M4. Ce bruit n'est pas contre-réactionné par l'amplificateur car, au-delà du produit gain - bande passante, l'amplificateur AMP1 n'a plus de gain (<<1) et ne fonctionne donc plus en amplificateur. Sa densité spectrale est atténuée par le diviseur capacitif formé de l'élément capacitif CF et de la capacité de la photodiode. On a :

$$B2 = \frac{C_F}{C_F + C_P} \times \sqrt{\frac{kT(C_F + C_P)}{C_F C_P}} = \sqrt{\frac{kT}{C_P}} \times \sqrt{\frac{C_F}{C_F + C_P}}$$

Le bruit habituel produit par la photodiode

$$(\sqrt{\frac{kT}{C_P}})$$

subit par conséquent une atténuation par le facteur

$$\sqrt{\frac{C_F}{C_F + C_P}} \sqrt{\frac{C_F}{C_F}} + C_P << 1.$$

**Troisième temps ($\phi_3$)**

Pendant le temps $\phi_3$, le signal de commande RS2 est inactif. Le transistor M4 est donc bloqué. Ce passage à un niveau bas doit être opéré très rapidement par rapport à la constante de temps de l'amplificateur AMP1. Le bruit B2 est alors bloqué dans la photodiode. Le bruit total se retrouvant alors dans la photodiode est la somme quadratique de B1 et B2.

$$B_{total} = \sqrt{B1^2 + B2^2}$$

$$\text{soit} \quad B_{total}{}^2 = kT\left[\frac{(C_P + C_F)^2}{G_0{}^2 C_F{}^3} + \frac{C_F}{C_P(C_F + C_P)}\right]$$

Ainsi, lorsque la valeur de la capacité de l'élément capacitif CF augmente, le bruit B1 diminue alors que le bruit B2 augmente. Il est donc possible de définir une valeur $C_F$ pour laquelle le bruit total est minimal. En pratique, la valeur minimale du bruit total est très inférieure à la valeur du bruit de réinitialisation habituel, à savoir

$$\sqrt{\frac{kT}{C_P}}$$

.

Les performances de ce pixel vis à vis de l'injection de charges électriques, de la réjection de l'alimentation et du problème de traînage sont les suivantes.

S'agissant de l'injection de charges électriques dans l'élément photosensible, le front descendant du signal de commande RS1 (début de $\phi_2$) provoque une injection de charges dans la photodiode provenant du transistor M3. Cette injection est ensuite corrigée par le gain de l'amplificateur AMP1 pendant le reste du temps $\phi_2$ (relaxation de l'amplificateur). Le bruit engendré par l'injection de charges électriques à l'issue du temps $\phi_2$ est alors égal au bruit initial (au début de $\phi_2$) divisé par (G+1) comme pour le bruit de réinitialisation engendré par l'élément capacitif CF. Ainsi, l'injection de charges électriques se retrouve de manière quasi-totale sur le drain du transistor de sélection, préservant ainsi le noeud photosensible. Le front descendant du signal de commande RS2 (début de $\phi_3$) provoque une injection de charges dans la photodiode provenant du transistor M4. Une fraction importante de ces charges électriques est absorbée par la capacité C présente sur la borne ALM car l'impédance de l'élément capacitif CF en série avec la photodiode est très supérieure à celle de la capacité C. Le reste des charges électriques se répartit entre l'élément capacitif CF et la photodiode PD. Une faible partie de ce reste est injectée dans la photodiode car $C_F >> C_P$. Il en résulte que le noeud photosensible est donc protégé contre une injection importante de charges électriques.

S'agissant de la réjection de la tension d'alimentation, le bruit d'alimentation est tout d'abord filtré par la capacité de charge C présente sur la borne ALM. Par ailleurs, la photodiode est découplée de l'alimentation d'une part par les transistors M1 et M2, et d'autre part par l'élément capacitif. Dans le premier cas, si le signal de sélection SEL est filtré (ce qui est possible puisque les transitions du signal de sélection SEL peuvent être lentes), le drain du transistor M1 est complètement découplé de l'alimentation et la photodiode aussi. Dans l'autre cas, le bruit d'alimentation est atténué par le diviseur capacitif.

S'agissant du mécanisme de traînage, lorsque les transistors M1, M2, M3 et M4 sont conducteurs, on impose sous faible impédance une tension fixe sur la photodiode, indépendante de la valeur initiale contenue dans le pixel. La constante de temps pour atteindre cet état est faible, environ 50 ns. Il en résulte que, au terme de quelques constantes de temps, la valeur initiale du pixel est totalement effacée.

Des simulations ont été effectuées pour mettre en évidence les performances en termes de bruit du procédé de- l'invention. Pour ces simulations, on a considéré une photodiode ayant une capacité CP=4fF (femtoFarads). Le gain statique $G_0$ de l'amplificateur vaut 1850 grâce à l'emploi du transistor M2 monté en cascode. Les résultats de cette simulation sont les suivants :

| $C_F$ | $\sqrt{\dfrac{kT}{C_F}}$ | $G_b = G_0 \times \dfrac{C_F}{C_F + C_P}$ | B1 | B2 | $B_{total} = \sqrt{B1^2 + B2^3}$ |
|---|---|---|---|---|---|
| 0,1fF | 6430µV | 45 | 143µV | 85µV | 166µV |
| 0,2fF | 4550µV | 88 | 52µV | 96µV | 109µV |
| 0,3fF | 3710µV | 129 | 29µV | 108µV | 112µV |
| 0,4fF | 3220µV | 168 | 19µV | 120µV | 121µV |
| 0,5fF | 2877µV | 205 | 14µV | 132µV | 133µV |

On obtient un bruit de réinitialisation minimal lorsque la capacité $C_F$ vaut 0,2fF. Le bruit de réinitialisation vaut alors 109µV. Cette valeur est à comparer avec celle du bruit de réinitialisation

$$\left(\sqrt{\frac{kT}{C_P}}\right)$$

dans un pixel actif CMOS classique qui vaut 1017µV dans le cas $C_p$=4fF. Le bruit de réinitialisation est alors réduit d'un facteur 9,3 soit 19,4 dB.

En pratique, cela permet d'améliorer la résolution des signaux. La conséquence principale est une amélioration significative de la qualité des images en faible éclairement.

En termes de réjection de l'alimentation, les simulations montrent également que le taux de réjection d'alimentation (dans les cas $C_F$=0,2fF; $C_F$=0,3fF; $C_F$=0,4fF) est toujours supérieur à 58dB jusqu'à 100MHz et ne tombe jamais en dessous de 50dB (à 1GHz). Cela permet de réduire fortement les contraintes imposées aux dispositifs d'alimentation des capteurs d'images CMOS.

Enfin, les simulations montrent également une absence de traînage et une très faible injection de charges au niveau de la photodiode.

De façon plus générale, le procédé de réinitialisation décrit précédemment peut être appliqué à tout pixel actif CMOS comportant au moins un élément photosensible de capacité $C_P$ ayant un noeud photosensible, un amplificateur ayant une entrée inverseuse connectée audit noeud photosensible, une entrée non inverseuse et une sortie, des premier et second interrupteurs et un élément capacitif de rétroaction ayant une capacité $C_F$ monté en parallèle sur ledit premier interrupteur. Le procédé comporte alors les étapes suivantes:

- appliquer, pendant un premier temps $\phi_1$, une tension de référence VREF sur l'entrée non inverseuse dudit amplificateur et relier la sortie dudit amplificateur sur son entrée inverseuse par l'intermédiaire desdits premier et second interrupteurs;
- relier, pendant un deuxième temps dit de relaxation $\phi_2$, la sortie dudit amplificateur sur son entrée inverseuse par l'intermédiaire dudit élément capacitif de rétroaction et dudit second interrupteur jusqu'à atteindre un état d'équilibre; et
- ouvrir, pendant un troisième temps $\phi_3$, lesdits premier et second interrupteurs.

A noter que la structure de pixel actif CMOS montrée à la figure 3 présente un avantage supplémentaire non négligeable. Il n'est pas nécessaire d'avoir recours à une double lecture du pixel pour lire l'information contenue dans la photodiode. En effet, la photodiode est réinitialisée par une tension de référence VREF appliquée sur la source du transistor M1. La tension grille-source du transistor M1 qui présente un offset aléatoire (variable de pixel à pixel) est mémorisée dans la photodiode (coté grille du transistor M1). Par conséquent, quand le transistor est monté en suiveur, cet offset aléatoire n'est plus présent sur la source du transistor M1. La double lecture du pixel n'est donc plus nécessaire.

## Revendications

1. Pixel actif CMOS pour capteur d'image comportant un élément photosensible (PD), tel qu'une photodiode, dont la charge électrique est réinitialisée pendant une phase de réinitialisation et lue pendant une. phase de lecture, ledit élément photosensible (PD) étant connecté entre un noeud photosensible (N) et la masse, **caractérisé en ce qu'**il comporte en outre:

   - un premier amplificateur (AMP1) actif pendant ladite phase de réinitialisation et dont les entrée inverseuse et non inverseuse sont respectivement connectées au noeud photosensible (N) et à une première source de tension de référence (SV),
   - des premier et second interrupteurs (IT1, IT2) connectés en série entre l'entrée inverseuse et la sortie dudit premier amplificateur (AMP1), commandés respectivement par des premier et second signaux de commande, ledit premier signal de commande (RS1) étant actif pendant un premier temps de la phase de réinitialisation et ledit second signal de commande (RS2) étant actif pendant ledit premier temps et un second temps de ladite phase de réinitialisation, lesdits premier et second signaux de commande (RS1,RS2) étant inactifs pendant un troisième temps de la phase de réinitialisation et pendant la phase de lecture,
   - un élément capacitif de rétroaction (CF) de capacité $C_F$, monté en parallèle sur ledit premier interrupteur (IT1), et
   - un second amplificateur (AMP2) monté en suiveur, actif pendant la phase de lecture, dont l'entrée est connectée au noeud photosensible (N) et la sortie (S) délivre un signal représentatif de la charge électrique dudit élément photosensible (PD) pendant ladite phase de lecture.

2. Pixel actif CMOS selon la revendication 1, **caractérisé en ce que** lesdits premier et second amplificateurs (AMP1,AMP2) consistent en un premier transistor (M1) dont la grille est connectée au noeud photosensible (N) et la source est reliée à ladite source de tension de référence (SV) pendant ladite phase de réinitialisation et à une première source de courant (SC2) pendant ladite phase de lecture, et un transistor de sélection (M2) commandé par un signal de sélection actif pendant lesdites phases de réinitialisation et de lecture dudit pixel, dont la source est connectée au drain du premier transistor (M1) et dont le drain est connecté à une seconde source de courant (SC1) pendant ladite phase de réinitialisation et à une seconde source de tension de référence (VDD) pendant ladite phase de lecture, la source dudit premier transistor (M1) délivrant ledit signal représentatif de la charge électrique dudit élément photosensible (PD) pendant ladite phase de lecture.

3. Pixel actif CMOS selon la revendication 1 ou 2, **caractérisé en ce que** le rapport $C_F/C_P$ est très inférieur à 1 et **en ce que** le gain du premier amplificateur (AMP1) est tel que le produit de ce gain par le rapport $C_F/(C_F+C_P)$ est grand devant 10.

4. Pixel actif CMOS selon l'une des revendications 1 à 3, **caractérisé en ce que** l'élément photosensible est une photodiode (PD).

5. Procédé de réinitialisation d'un pixel actif CMOS comportant au moins un élément photosensible (PD) de capacité $C_P$ ayant un noeud photosensible, un amplificateur (AMP1) ayant une entrée inverseuse connectée audit noeud photosensible, une entrée non inverseuse et une sortie, des premier et second interrupteurs (IT1,IT2) et un élément capacitif de rétroaction (CF) ayant une capacité $C_F$ monté en parallèle sur ledit premier interrupteur (IT1), ledit procédé étant **caractérisé en ce qu'**il comprend les étapes suivantes:

   - appliquer, pendant un premier temps ($\phi_1$), une tension de référence (VREF) sur l'entrée non inverseuse dudit amplificateur (AMP1) et relier la sortie dudit amplificateur sur son entrée inverseuse par l'intermédiaire desdits premier et second interrupteurs (IT1,IT2);
   - relier, pendant un deuxième temps dit de relaxation ($\phi_2$), la sortie dudit amplificateur (AMP1) sur son entrée inverseuse par l'intermédiaire dudit élément capacitif de rétroaction (CF) et dudit second interrupteur (IT2) jusqu'à atteindre un état d'équilibre; et
   - ouvrir, pendant un troisième temps ($\phi_3$), lesdits premier et second interrupteurs (IT1,IT2).

6. Procédé selon la revendication 5, **caractérisé en ce que** le rapport $C_F/C_P$ est très inférieur à 1 et **en ce que** le gain de l'amplificateur est tel que le produit de ce gain par le rapport $C_F/(C_F+C_P)$ est grand devant 10.

FIG.1

FIG.2

**FIG.3**

FIG.4

Office européen
des brevets

**RAPPORT DE RECHERCHE EUROPEENNE**

Numéro de la demande

EP 02 36 4029

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 01 22727 A (PIXEL DEVICES INTERNATIONAL IN) 29 mars 2001 (2001-03-29) <br> * page 8, ligne 8 - ligne 17 * <br> * page 10, ligne 8 - ligne 10 * <br> * page 18, ligne 13 - ligne 18; figure 1 * | 1,5 | H04N3/15 |

**DOMAINES TECHNIQUES RECHERCHES (Int.Cl.7)**

H04N

Le présent rapport a été établi pour toutes les revendications

| Lieu de la recherche | Date d'achèvement de la recherche | Examinateur |
|---|---|---|
| LA HAYE | 27 septembre 2002 | Bequet, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 02 36 4029

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-09-2002

| Document brevet cité au rapport de recherche | | Date de publication | Membre(s) de la famille de brevet(s) | | Date de publication |
|---|---|---|---|---|---|
| WO 0122727 | A | 29-03-2001 | US | 6424375 B1 | 23-07-2002 |
| | | | EP | 1222815 A1 | 17-07-2002 |
| | | | WO | 0122727 A1 | 29-03-2001 |

EPO FORM P0460